# EUROPEAN PATENT SPECIFICATION

(11) **EP 3 880 853 B1**
(45) Date of publication and mention of the grant of the patent: **25.03.2026**
(21) Application number: 19883916.9
(22) Date of filing: 16.08.2019
(51) Int. Cl.: C22B 1/22, B02C 23/08, B02C 21/00, B03B 9/00, B02C 23/14, B03B 7/00

(54) **METHOD AND APPARATUS FOR PROCESSING MAGNETITE**
VERFAHREN UND VORRICHTUNG ZUR VERARBEITUNG VON MAGNETIT
PROCÉDÉ ET APPAREIL DE TRAITEMENT DE MAGNÉTITE

(30) Priority: 14.11.2018 AU 2018904333; 05.07.2019 AU 2019902399
(43) Date of publication of application: 22.09.2021
(73) Proprietor: IB Operations Pty Ltd, East Perth, Western Australia 6004 (AU)
(72) Inventor: LAROSA, Gerald Michael, Perth, Western Australia 6004 (AU); HAMILTON, Andrew Graham, Perth, Western Australia 6004 (AU)
(74) Representative: Lavoix
(86) International application number: PCT/AU2019/050866
(87) International publication number: WO 2020/097667

(56) References cited:
- AU-B2- 2011 364 769
- AU-B2- 2011 364 769
- US-A- 3 502 271
- US-B2- 7 931 218
- US-B2- 7 931 218

## Description

### Field of the Invention

The present invention relates to an apparatus for processing magnetite and more specifically, for processing magnetite with improved cost effectiveness through the reduction in energy consumption in processing the magnetite into a form suitable for international shipping.

### Background to the Invention

It is known to mine iron ore for the production of steel and the like. Iron ore is one of Australia's most significant exports, however the applicant has identified a problem in that some hematite iron ore can be subject to lower desirability and pricing on the international market owing to the quality of the iron ore product and, in particular, the purity of the product by weight (that is, the percentage of the product by weight which is actually iron).

Iron ores are rocks and minerals from which metallic iron can be economically extracted. The iron itself is usually found in the form of magnetite (Fe₃O₄, 72.4% Fe), hematite (Fe₂O₃, 69.9% Fe), goethite (FeO(OH), 62.9% Fe), limonite (FeO(OH)·n(H₂O), 55% Fe) or siderite (FeCO₃, 48.2% Fe). Although iron is the fourth most abundant element in the Earth's crust, comprising about 5%, the vast majority is bound in silicate or more rarely carbonate minerals. The thermodynamic barriers to separating pure iron from these minerals are formidable and energy intensive, therefore all sources of iron used by human industry exploit comparatively rarer iron oxide minerals, primarily hematite.

The applicant has identified that the grade of Direct-Shipping iron-Ore (DSO) deposits (typically composed of hematite) is getting worse as resources are progressively being used, this lower grade being a strong contributor to the decline in desirability and pricing. In contrast, the applicant has identified that magnetite concentrate grades are generally in excess of 66% iron by weight and usually are low phosphorus, low aluminium, low titanium and low silica and demand a premium price. However, there exists a problem in that processing magnetite is typically not cost-effective as it requires a lot of energy and water. Examples of the present invention seek to provide a method of processing magnetite iron ore which has improved cost-effectiveness through using less energy and/or water.

An apparatus for processing magnetite is presented in US 7 931 218 B2.

### Summary of the Invention

In accordance with one aspect there is provided a method of processing magnetite iron ore, including the step of using a high pressure grinding roller (HPGR) to crush the magnetite.

Preferably, the step of using a high pressure grinding roller crushes the magnetite from a feed particle size distribution of at least 80mm to a feed particle size distribution of 8mm. More preferably, the step of using a high pressure grinding roller crushes the magnetite from a feed particle size distribution of at least 80mm, 100% passing (F₁₀₀80mm), to a feed particle size distribution of 8mm, 100% passing (F₁₀₀8mm).

In the case of at least one particular make/model of machine, the step of using a high pressure grinding roller includes using the high pressure grinding roller with 2.4m diameter x 2.2m wide roll operating at 4N/mm² pressure and 2.7 m/s roll speed.

Preferably, further including the step of using a screen to generate a consistent product, and the step of using a dry magnetic separation unit (DMS) unit to discard non-magnetic materials. More preferably, the dry magnetic separation unit has a composite material construction drum. Alternatively, the drum may be formed from other materials such as carbon fibre or kevlar.

It is preferred that the method further includes the step of passing the particles through an air classifier which separates fines which are fed to a bag house from coarse particles which are fed back to a further high pressure grinding roller for grinding the particles from F₁₀₀6-8mm to P₈₀60-100µm.

In accordance with another aspect there is provided an apparatus for processing magnetite iron ore, including a dry magnetic separation (DMS) unit having a composite fabrication drum, the dry magnetic separation unit being for discarding non-magnetic materials.

Preferably, the apparatus for processing magnetite iron ore includes a high pressure grinding roller (HPGR) to crush the magnetite. More preferably, the apparatus for processing magnetite iron ore includes a dry screen for separating undersize particles from oversize particles which are recycled back through the high pressure grinding roller.

Even more preferably, the apparatus for processing magnetite iron ore includes a further high pressure grinding roller (HPGR) for grinding the particles from F₁₀₀6-8mm to P₈₀60-100µm and an air classifier for separating material which is to be extracted from material which is to be fed back to the further high pressure grinding roller for additional grinding.

In accordance with another aspect there is provided an apparatus for processing magnetite iron ore, including a first high pressure grinding roller for crushing the magnetite, a dry screen for selectively feeding back, material to the first high pressure grinding roller, an air classifier for selectively feeding coarse material to the second high pressure grinding roller, a second high pressure grinding roller for further grinding of the magnetite, returning material to the air classifier and a dry magnetic separation (DMS) unit for discarding non-magnetic materials, wherein the dry magnetic separation unit is outside the two feedback loops associated with the first and second high pressure grinding rollers.

According to the invention there is provided an apparatus for processing magnetite iron ore as defined in claim 1.

Preferably, the mill is in the form of a High Intensity Grinding mill (HIGmill).

It is preferred that the mill is arranged in the apparatus without any feedback path to the mill.

In one form, the cyclone is arranged to divert approximately 25% of material to bypass the mill.

Preferably, the cyclone is arranged to divert finely ground material around the mill to prevent overgrinding feed material, and thus reducing the overall mill power consumption.

In a preferred form, the mill is configured to operate in a comparable low energy grind mode, where difficult particles are allowed to pass through the open circuit configuration at above the target grind size to be processed and /or discarded through later processing steps.

The apparatus includes a downstream deslime thickener, wherein the downstream deslime thickener is fed material from the mill and from the upstream cyclone overflow. The downstream deslime thickener is arranged to deslime material from the mill and from the upstream cyclone overflow at a rise rate to discard silica and non-magnetic materials.

The downstream deslime thickener is arranged to deslime material from the mill and from the upstream cyclone overflow at a rise rate to discard silica and non-magnetic materials at relatively low magnetic material losses compared to mass loss. More preferably, the downstream deslime thickener is arranged to deslime material from the mill and from the upstream cyclone overflow at a high rise rate of 8-10m/h to discard silica and non-magnetic materials at relatively low magnetic material losses compared to mass loss.

It is preferred that the downstream deslime thickener is arranged such that an overflow from the downstream deslime thickener is diverted to a tailings storage facility whereas an underflow from the downstream deslime thickener is fed onward for further processing.

Preferably, the apparatus includes a magnetic separator arranged to send magnetic material to said cons cyclone and to divert non-magnetic material to the tailings storage facility. More preferably, said magnetic separator provides wet magnetic separation.

There is also disclosed an apparatus for processing magnetite iron ore, including a mill for grinding ore particles, wherein the mill is in the form of a Vertical Stirred Mill (VSM).

In a preferred form, the second circuit grinds the more difficult material that has passed through the first mill circuit; the mill product from the first mill circuit is further processed to remove non-magnetic materials (via the deslime thickeners and cleaner magnetic separators) where the magnetic concentrate stream is further sized via cyclones (to remove fines) and high frequency low amplitude vibrating screens where the high frequency low amplitude vibrating screen oversize stream serves as feed to the second stage open circuit mill system.

More preferably, although the second stage open circuit mill system is operated at a higher energy grind mode than the first stage circuit, the feed to the second stage circuit is only 12-18% of the feed stream to the first stage mill circuit, thus minimising overall mill power consumption by only grinding the larger, lower flower rate, more difficult material.

There is also disclosed an apparatus for processing magnetite iron ore, including a cons cyclone arranged to send underflow material to the high frequency vibrating screen and overflow material to downstream CCD deslime thickener.

There is also disclosed an apparatus for processing magnetite iron ore, including a screen arranged to send oversize material to a regrind mill and undersize material to a high grade concentrate thickener.

Preferably, the high grade concentrate thickener is arranged to divert overflow to a tailings storage facility and to feed underflow to a filter feed tank. More preferably, all material from the regrind mill is fed to a magnetic separator which diverts non-magnetic material to the tailings storage facility and feeds magnetic material to one or more deslime CCD thickeners.

In a preferred form, the one or more deslime thickeners are arranged to divert overflow to the tailings storage facility and to feed underflow to the filter feed tank. More preferably, the apparatus includes a cyclone separator arranged to feed overflow to said one or more deslime thickeners, and to feed underflow to said screen for screening. Even more preferably, the apparatus provides a product upgrade circuit whereby percentage by mass content of iron is able to be increased to guarantee a specific grade.

Preferably, the apparatus provides a product upgrade circuit whereby percentage by mass content of iron is able to be increased to guarantee a grade of at least 67% by weight content of iron (Fe).

In one form, the high grade concentrate thickener is able to provide a high grade magnetite product, for example 25% of total product at a Fe grade of at least 68%.

Preferably, the product upgrade circuit minimises additional grinding by processing only 15-20% of material fed to the cons cyclone separator and ensures a final concentrate product is at P₉₈ of 45µm (screen) to achieve target grade of at least 67% Fe and less than 6% SiO₂.

There is also disclosed a method of dewatering magnetite, including the step of extracting water from the magnetite by virtue of the magnetism of the magnetite, whereby the magnetite pulls together under magnetic attraction thereby squeezing water outwardly and away from the magnetite.

Preferably, the method includes the step of using a magnetic drum to cause the magnetite to compress itself toward the drum, thereby expelling water from the magnetite. More preferably, the drum is arranged such that the magnetite material peels away from the magnetic drum under gravitational force after expelling water. Even more preferably, the magnetite is fed along a belt filter which allows water to drop downwardly from the magnetite and through the belt filter.

There is also disclosed an apparatus for dewatering magnetite, including a magnetic drum arranged to cause the magnetite to compress itself toward the drum, thereby expelling water from the magnetite.

Preferably, the apparatus includes a conveyor belt filter arranged such that magnetite conveyed along an upper surface of the belt filter will compress itself downwardly under magnetic attraction within the magnetite such that water is expelled from the magnetite and drains through the conveyor belt filter.

More preferably, the apparatus is configured to achieve a target moisture content of less than or equal to 10% w/w.

In accordance with another aspect there is provided an apparatus for processing magnetite iron ore, including a first high pressure grinding roller (HPGR) for crushing the magnetite iron ore into particles, and a second high pressure grinding roller (HPGR) for grinding the particles.

Preferably, the first high pressure grinding roller crushes the magnetite iron ore from a feed particle size distribution of at least 80mm, 100% passing (F₁₀₀80mm), to a feed particle size distribution of 8mm, 100% passing (F₁₀₀8mm).

In a preferred form, the second high pressure grinding roller crushes the particles from a feed particle size distribution of at least 6-8mm, 100% passing (F₁₀₀6-8mm), to a feed particle size distribution of 60-100µm, 80% passing (F₈₀60-100µm).

In accordance with another aspect there is provided a method of processing a low moisture magnetite ore body via a two-stage HPGR circuit which allows for the optimisation of the HPGR to work from top size of 80mm to produce a product P₈₀ of 80 µm to reduce power consumption.

Preferably, a first HPGR circuit is in closed circuit with a screen, and a second HPGR circuit is closed with an Air Classifier / Baghouse system.

More preferably, the two circuits are separated by Dry Magnetic Separation, to remove non-magnetic waste material prior to the second circuit, thus reducing the throughput and additional grinding to the second HPGR circuit.

In accordance with another aspect there is provided an apparatus for processing magnetite iron ore, including an upstream cyclone and a mill for grinding particles, wherein the upstream cyclone is arranged to operate as a splitter by diverting material in an overflow of the upstream cyclone to bypass the mill and by feeding material in an underflow of the upstream cyclone to the mill, and wherein the apparatus includes a magnetic separator arranged to send magnetic material to said upstream cyclone and to divert non-magnetic material.

Preferably, the magnetic separator is arranged to divert non-magnetic material to a tailings storage facility.

In accordance with another aspect there is provided an apparatus when used for processing magnetite iron ore, the apparatus including a screen arranged to send oversize material to a regrind mill and undersize material to a high grade concentrate thickener and includes a Counter Current Decantation (CCD) thickener type system for product grade improvements.

Preferably, the apparatus provides a product upgrade circuit whereby the mass content of iron is able to be increased to guarantee a grade of at least 67% by weight content of iron (Fe) from 64 to 65 wt% total Fe magnetite feed streams with minimal loss by removing slimes (cons cyclone) prior to further hydro-separation processing, and by limiting +45 micron material to < 2 wt% in the final product stream via derrick screens followed by regrind mills and magnetic separators to limit oversize mass loss.

In accordance with another aspect there is provided a magnetite iron ore processing apparatus, the apparatus including a screen arranged to send oversize material to a regrind mill and undersize material to a high grade concentrate thickener, the apparatus including a Counter Current Decantation (CCD) thickener type system for product grade improvements.

Preferably, the apparatus includes a cyclone separator arranged to feed overflow to one or more CCD deslime thickeners and to feed underflow to said screen for screening, the apparatus also including a product upgrade circuit minimising additional grinding by processing only 15-20% of material fed to the cyclone separator and ensuring a final concentrate product is at P₉₈ of 45µm (screen) to achieve target grade of at least 67% Fe and less than 6% SiO₂.

In accordance with another aspect there is provided a method of dewatering fine magnetite concentrate (P80L ≤ 45µm or more specifically P80L of 25µm - 35µm) to ≤ 10% w/w moisture content, with an apparatus for dewatering magnetite as described above, where the dewatered magnetite is discharged from the drum and further dewatered using a conveyor belt filter arranged such that the magnetite conveyed along the upper surface of the belt filter will compress itself downwardly under magnetic attraction within the magnetite such that water is further expelled from the magnetite and drains through the conveyor belt filter.

### Brief Description of the Drawings

A preferred embodiment of the invention will be described, by way of non-limiting example only, with reference to the accompanying drawings in which:
**Figure 1** is an overall "Stage 2" processing flowsheet, including Modules 1 to 7;
**Figure 2** shows Modules 1 and 2;
**Figure 3** shows Module 3;
**Figure 4** shows Module 4;
**Figure 5** shows Module 5, including Modules 5A, 5B and 5C;
**Figure 6** shows Module 6;
**Figure 7** shows Module 7;
**Figure 8** shows Modules 3 and 4 combined;
**Figure 9** shows Modules 5A and 5B combined;
**Figure 9a** shows an alternate flowsheet which further expands on Figure 9 to demonstrate the second circuit to grind the more difficult material that has passed through the first mill circuit;
**Figure 10** shows Module 5C; and
**Figures 11 to 18** show an alternative to hyperbaric filtration, being dewatering magnetic drums followed by belt filters.

### Detailed Description

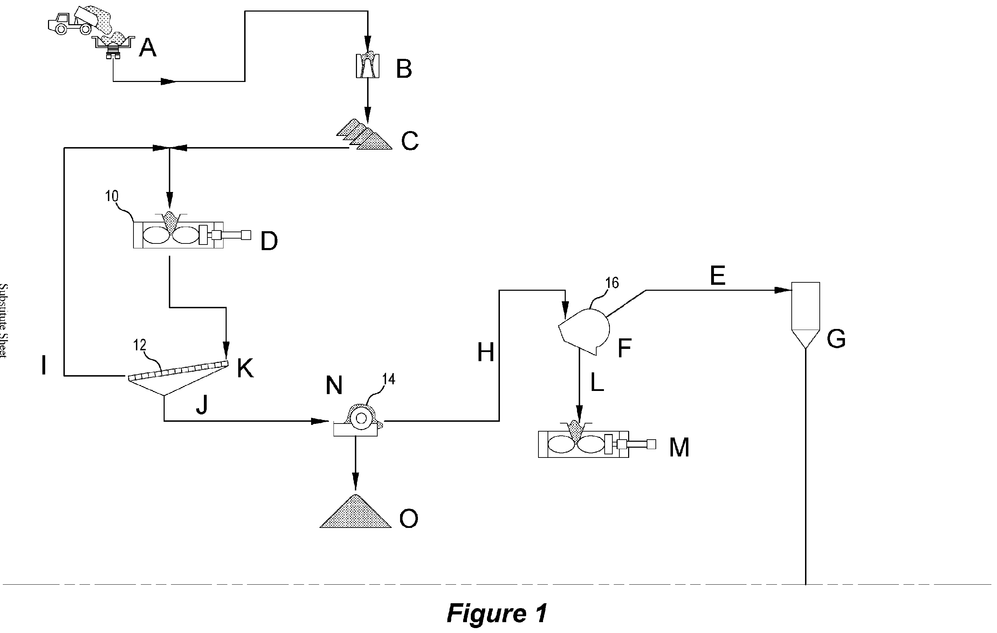

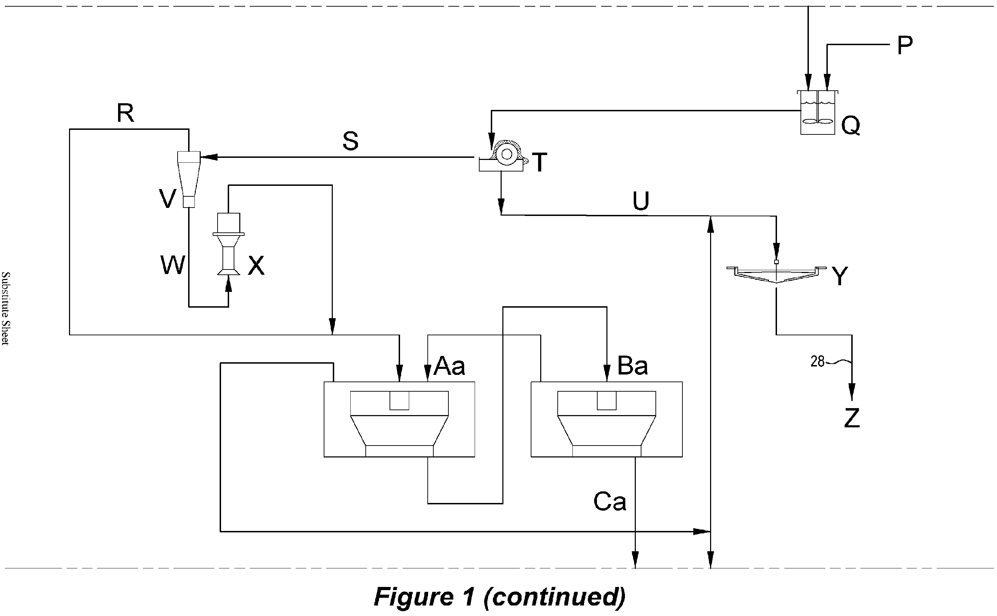

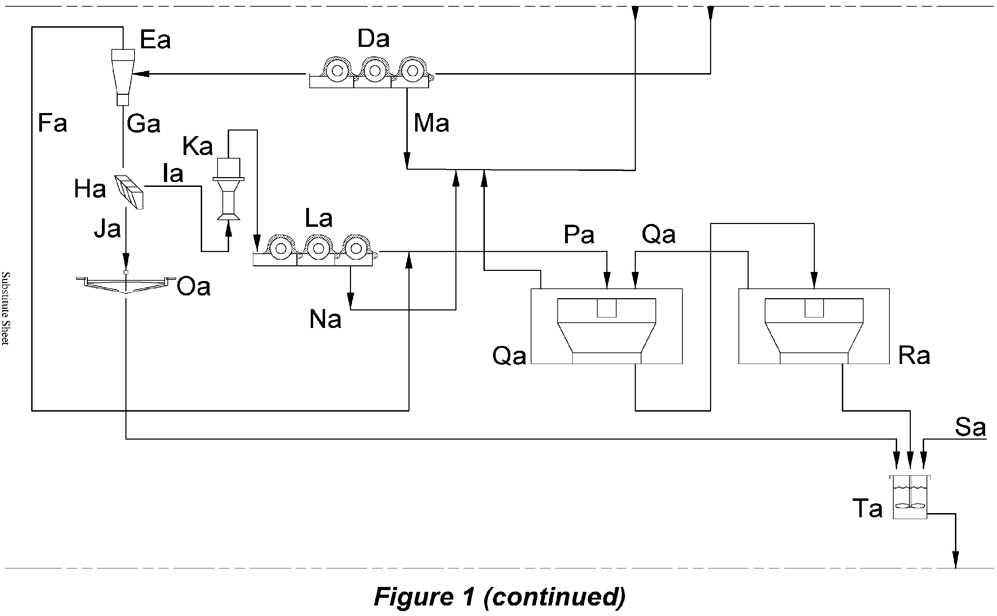

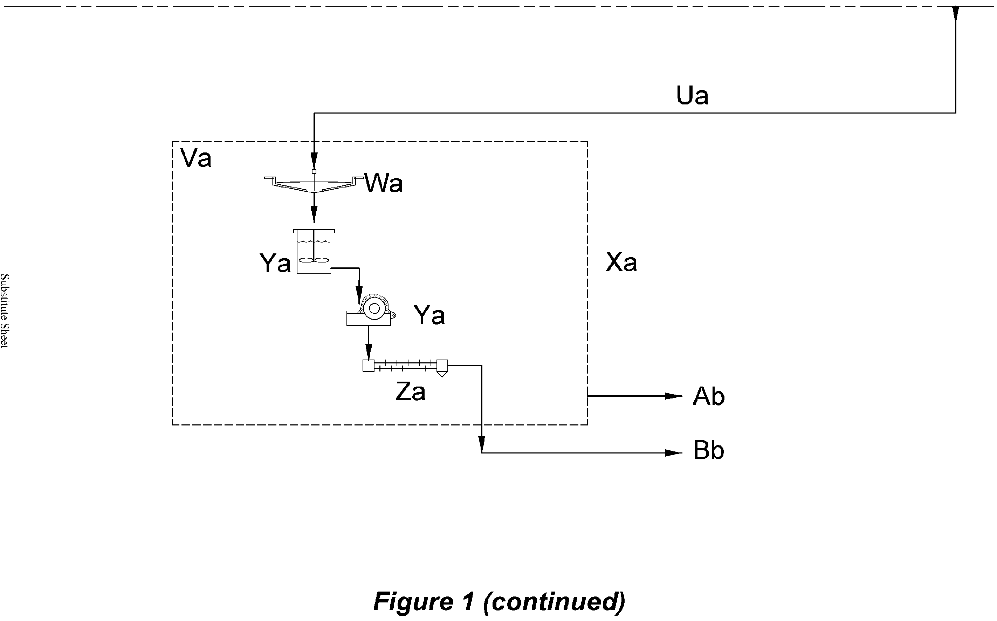

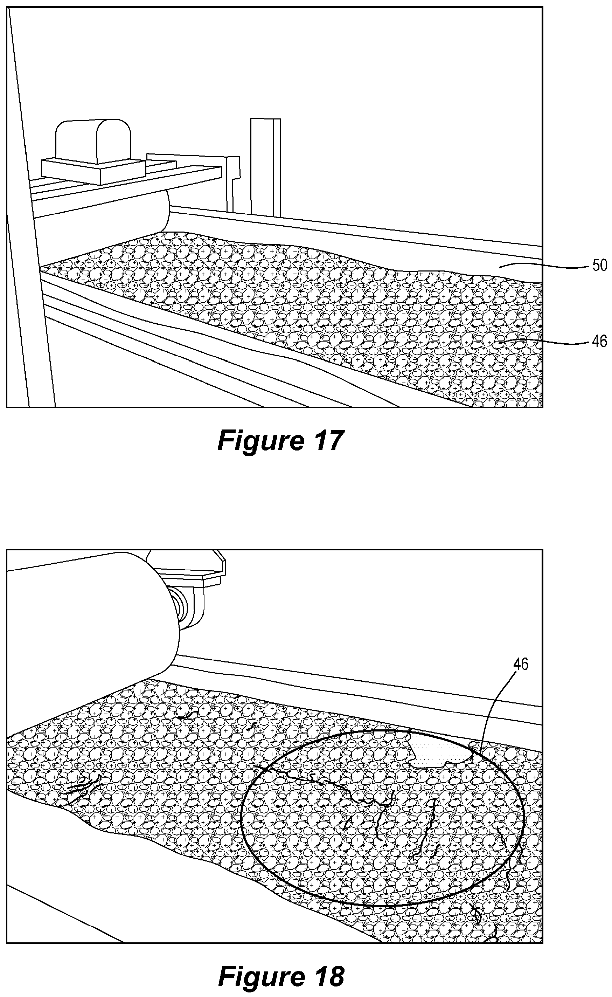

With reference to Figures 1 to 18, there is shown a method and apparatus for processing magnetite according to a preferred embodiment of the present invention.

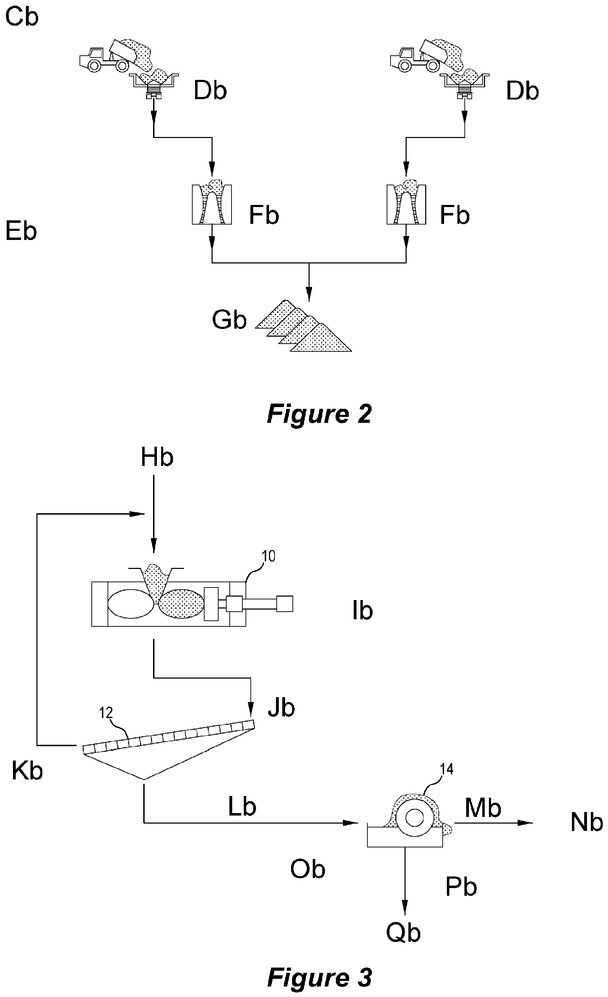

Figure 1 shows the Stage 2 processing in its entirety, whereas Figure 2 shows primary crushing and secondary crushing in Modules 1 and 2. Turning to Figure 3, there is shown a method of processing magnetite iron ore, including the step of using a high pressure grinding roller (HPGR) 10 to crush the magnetite. It is to be noted that the high pressure grinding roller 10 is used in a tertiary crushing mode rather than in a grinding mode.

In the example depicted, the step of using a high pressure grinding roller 10 crushes the magnetite from a feed particle size distribution of at least 80mm to a feed particle size distribution of 8mm. More preferably, the step of using a high pressure grinding roller 10 crushes the magnetite from a feed particle size distribution of at least 80mm, 100% passing (F₁₀₀80mm), to a feed particle size distribution of 8mm, 100% passing (F₁₀₀8mm).

In the case of one particular make/model of machine, the step of using a high pressure grinding roller 10 may include using the high pressure grinding roller 10 with 2.4m diameter x 2.2m wide roll operating at 4N/mm² pressure and 2.7 m/s roll speed.

The method may further include the step of using a dry screen 12 to generate a consistent product, and the step of using a dry magnetic separation unit (DMS) unit 14 to discard non-magnetic materials. The dry magnetic separation unit 14 may have a composite fabrication drum to avoid overheating caused by an eddy current phenomenon in a steel drum.

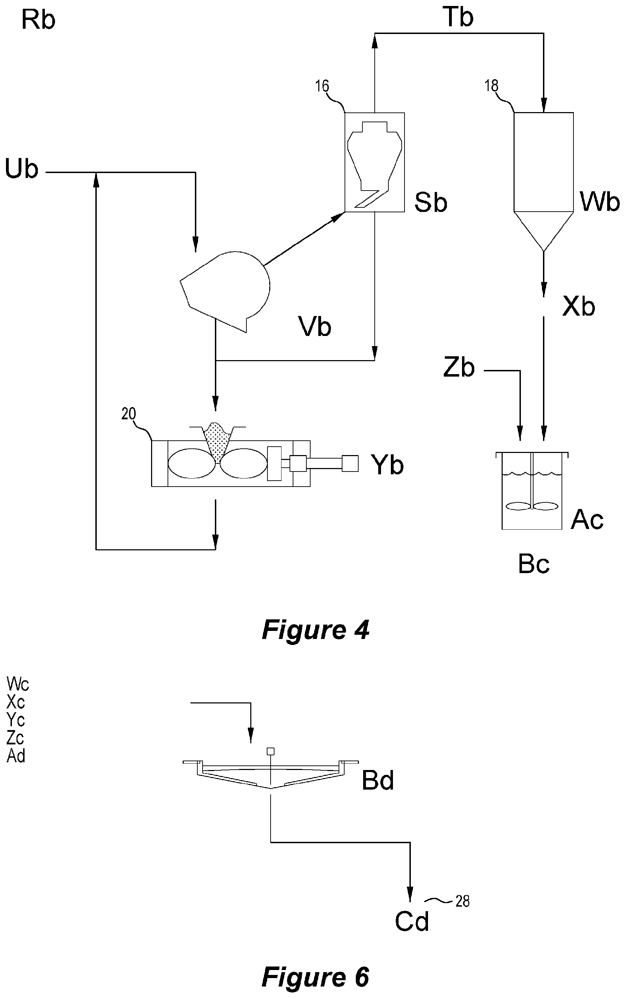

Turning to Figure 4, the method may further include the step of passing the particles through an air classifier 16 which separates fines which are fed to a bag house 18 from coarse particles which are fed back to a further high pressure grinding roller 20 for grinding the particles from F₁₀₀6-8mm to P₈₀60-100µm.

In another aspect, there is provided an apparatus for processing magnetite iron ore, including a dry magnetic separation (DMS) unit 14 having a composite fabrication drum, the dry magnetic separation unit 14 being for discarding non-magnetic materials.

In Figure 3, the apparatus for processing magnetite iron ore includes a high pressure grinding roller (HPGR) 10 to crush the magnetite. The apparatus for processing magnetite iron ore includes a dry screen 12 for separating undersize particles from oversize particles which are recycled back through the high pressure grinding roller 10.

In Figure 4, the apparatus for processing magnetite iron ore includes a further high pressure grinding roller (HPGR) 20 for grinding the particles from F₁₀₀6-8mm to P₈₀60-100µm and an air classifier 16 for separating material which is to be extracted from material which is to be fed back to the further high pressure grinding roller 20 for additional grinding.

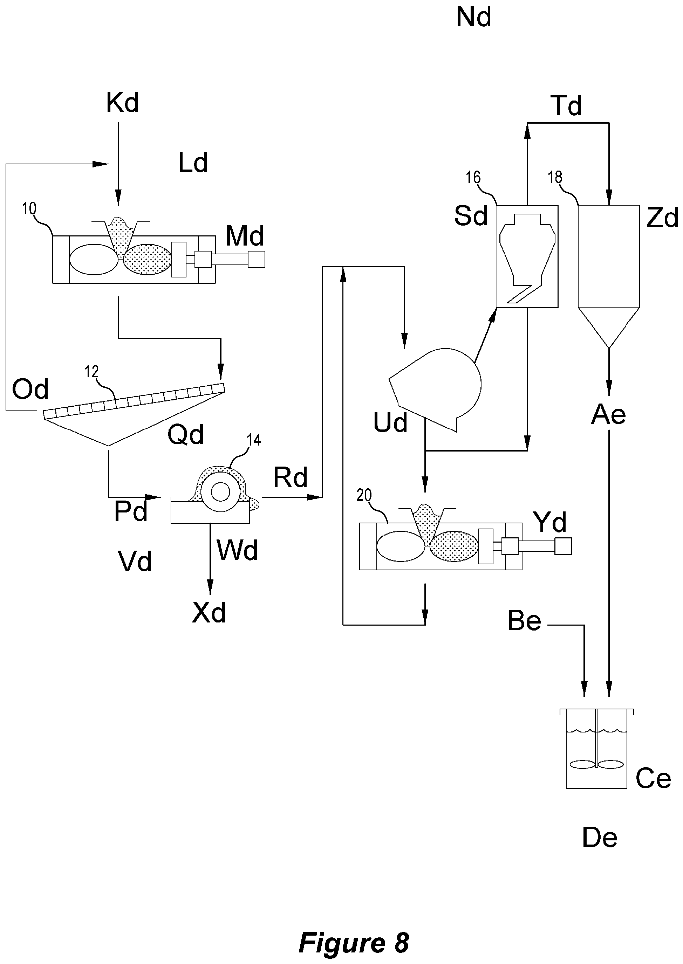

Turning to Figure 8 which shows Modules 3 and 4 combined, in another aspect, there is provided an apparatus for processing magnetite iron ore, including a first high pressure grinding roller 10 for crushing the magnetite, a dry screen 12 for selectively feeding back material to the first high pressure grinding roller 10, an air classifier 16, for selectively feeding back, coarse material to the second high pressure grinding roll 20, a second high pressure grinding roll 20 to further grind the magnetite material for return back to the air classifier 16, and a dry magnetic separation (DMS) unit 14 for discarding non-magnetic materials, wherein the dry magnetic separation unit 14 is outside the two feedback loops associated with the first and second high pressure grinding rollers 10, 20.

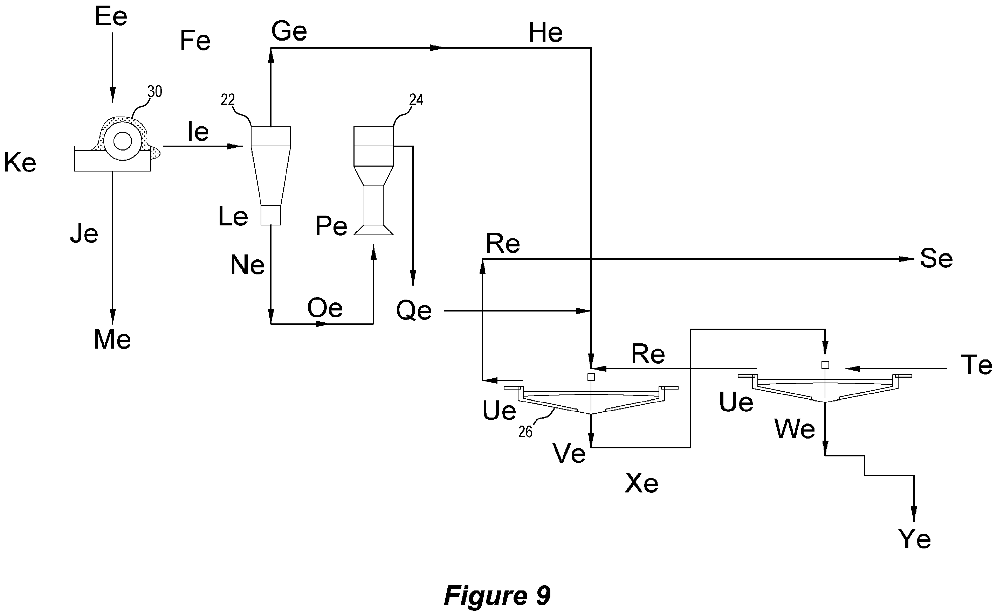

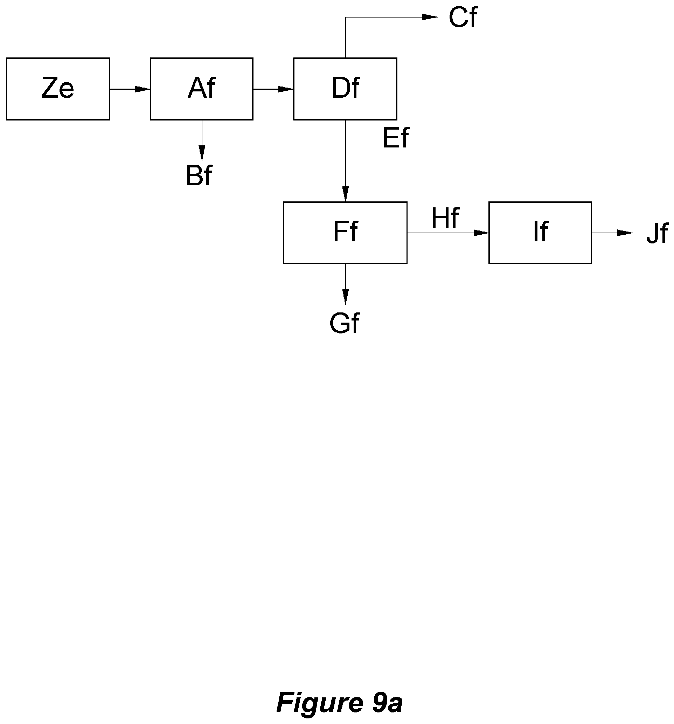

With reference to Figure 9, there is also disclosed an apparatus for processing magnetite iron ore in the form of Modules 5A and 5B, including an upstream cyclone 22 and a mill 24 for grinding particles, wherein the upstream cyclone 22 is arranged to operate as a splitter by diverting material in an overflow of the upstream cyclone 22 to bypass the mill 24 and by feeding material in an underflow of the upstream cyclone 22 to the mill 24.

The mill 24 may be in the form of a High Intensity Grinding mill (HIGmill). The mill 24 may be arranged in the apparatus without any feedback path to the mill 24.

In one form, the cyclone 22 is arranged to divert approximately 25% of material to bypass the mill 24. The cyclone 22 may be arranged to divert finely ground material around the mill to prevent overgrinding feed material, and thus reducing the overall mill power consumption. The mill may be configured to operate in a comparable low energy grind mode, where difficult particles are allowed to pass through the open circuit configuration at above the target grind size to be processed and /or discarded through later processing steps.

As shown in Figure 9, the apparatus includes a downstream deslime thickener 26 (and possibly more than one), wherein the downstream deslime thickener 26 is fed material from the mill 24 and from the upstream cyclone overflow. More preferably, the downstream deslime thickener 26 is arranged to deslime material from the mill 24 and from the upstream cyclone 22 overflow at a rise rate to discard silica and non-magnetic materials.

In one particular form, the downstream deslime thickener is arranged to deslime material from the mill 24 and from the upstream cyclone 22 overflow at a rise rate to discard silica and non-magnetic materials at relatively low magnetic material losses compared to mass loss. Specifically, the downstream deslime thickener 26 may be arranged to deslime material from the mill 24 and from the upstream cyclone 22 overflow at a high rise rate of 8-10m/h to discard silica and non-magnetic materials at relatively low magnetic material losses compared to mass loss.

The downstream deslime thickener may be arranged such that an overflow from the downstream deslime thickener 26 is diverted to a tailings storage facility 28 whereas an underflow from the downstream deslime thickener 26 is fed onward for further processing.

Also as shown in Figure 9, the apparatus includes a magnetic separator 30 arranged to send magnetic material to said upstream cyclone 22 and to divert non-magnetic material to the tailings storage facility 28. More preferably, said magnetic separator 30 provides wet magnetic separation.

In another aspect, there is an apparatus for processing magnetite iron ore, including a mill 24 for grinding ore particles, wherein the mill 24 is in the form of a High Intensity Grinding mill (HIGmill).

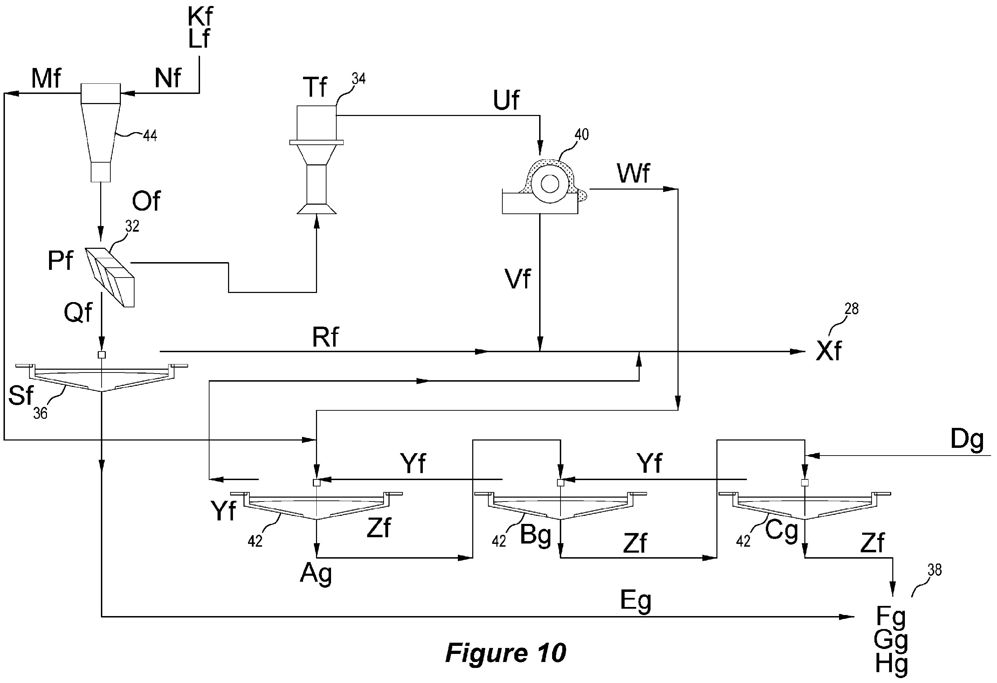

With reference to Module 5C shown in Figure 10, there is also disclosed an apparatus for processing magnetite iron ore, including a screen 32 (which may be in the form of a High Frequency Vibrating screen) arranged to send oversize material to a regrind mill 34 and undersize material to a high grade concentrate thickener 36.

The high grade concentrate thickener 36 is arranged to divert overflow to the tailings storage facility 28 and to feed underflow to a filter feed tank 38. All material from the regrind mill 34 is fed to a magnetic separator 40 which diverts non-magnetic material to the tailings storage facility 28 and feeds magnetic material to one or more deslime thickeners 42.

The one or more CCD deslime thickeners 42 are arranged to divert overflow to the tailings storage facility 28 and to feed underflow to the filter feed tank 38. The apparatus includes a cyclone separator 44 arranged to feed overflow to said one or more deslime thickeners 42, and to feed underflow to said screen 32 for screening. The apparatus provides accordingly a product upgrade circuit whereby percentage by mass content of iron is able to be increased to guarantee a specific grade.

In one form, the apparatus may provide a product upgrade circuit whereby percentage by mass content of iron is able to be increased to guarantee a grade of at least 67% by weight content of iron (Fe).

The high grade concentrate thickener 36 may be able to provide a high grade magnetite product, for example 25% of total product at a Fe grade of at least 68%.

The product upgrade circuit is able to minimise additional grinding by processing only 15-20% of material fed to the cyclone separator 44 and ensures a final concentrate product is at P₉₈ of 45µm (screen) to achieve target grade of at least 67% Fe and less than 6% SiO₂.

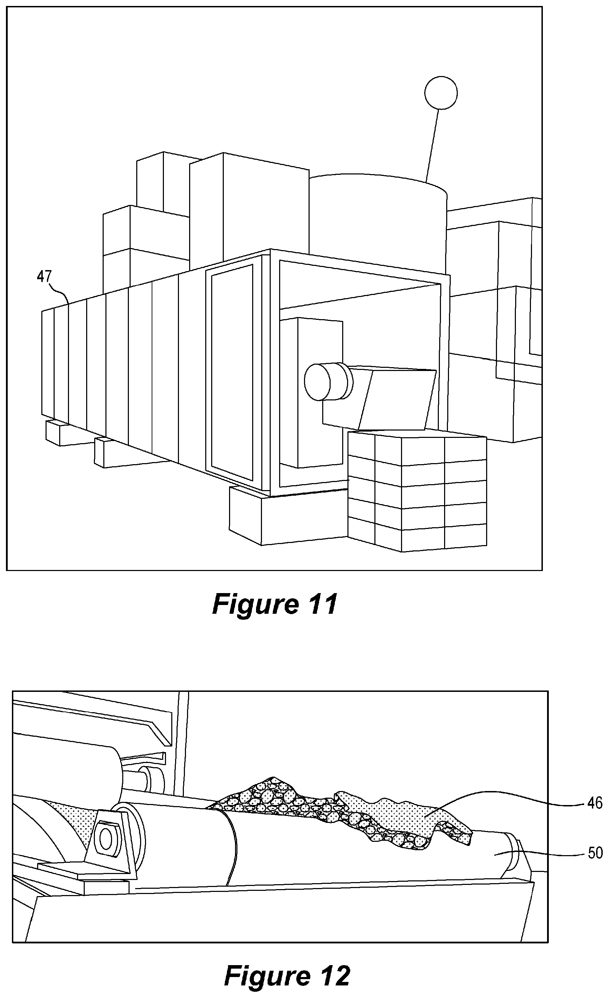

With reference to Figures 11 to 18, there is also disclosed a method of dewatering magnetite 46, including the step of extracting water from the magnetite 46 by virtue of the magnetism of the magnetite 46, whereby the magnetite 46 pulls together under magnetic attraction thereby squeezing water outwardly and away from the magnetite 46. Figure 11 shows a container 47 where the method may be carried out, whereas Figures 12 to 18 show more specifics of the dewatering apparatus.

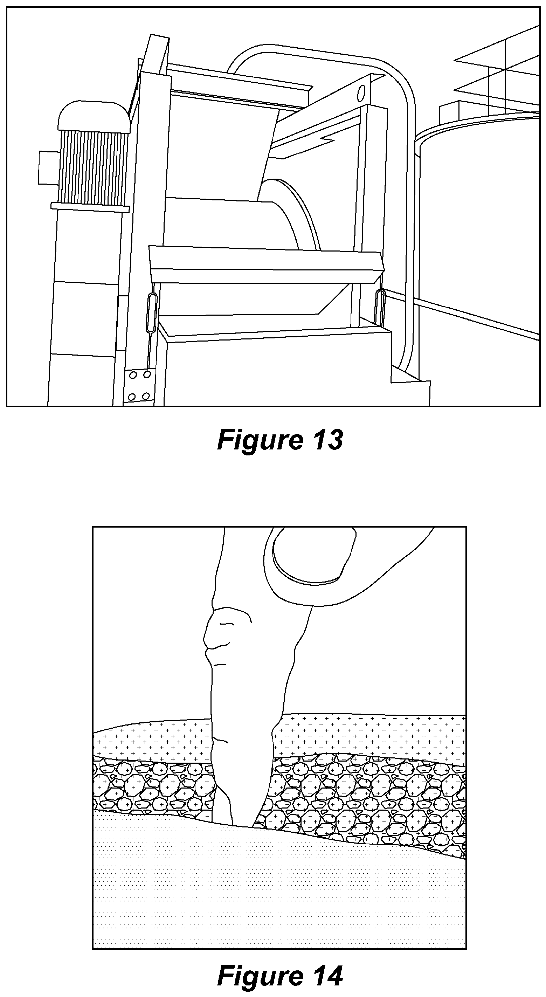

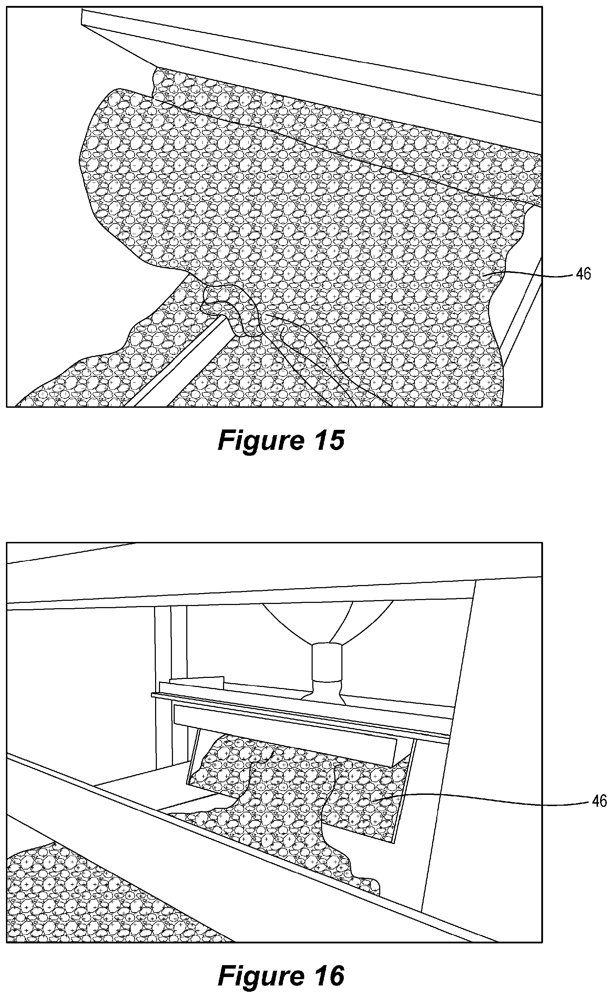

The method may include the step of using a magnetic drum 48 (see Figures 13 and 15) to cause the magnetite 46 to compress itself toward the drum 48, thereby expelling water from the magnetite 46. The drum 48 may be arranged such that the magnetite 46 material peels away from the magnetic drum 48 under gravitational force after expelling water. In one form, the magnetite 46 may be fed along a belt filter 50 which allows water to drop downwardly from the magnetite 46 and through the belt filter 50.

There is also disclosed an apparatus for dewatering magnetite, including a magnetic drum 48 arranged to cause the magnetite to compress itself toward the drum 48, thereby expelling water from the magnetite.

The apparatus may include a conveyor belt filter 50 arranged such that magnetite conveyed along an upper surface of the belt filter 50 will compress itself downwardly under magnetic attraction within the magnetite such that water is expelled from the magnetite and drains through the conveyor belt filter 50.

More preferably, the apparatus is configured to achieve a target moisture content of less than or equal to 10% w/w.

### EXAMPLE

### 1. GLOSSARY

**Table 1: Glossary of Terms**

| **Abbreviation** | **Definition** |
|---|---|
| BBWi | Bond Ball Work Index |
| CCD | Counter Current Decantation |
| CHF | Concentrate Handling Facility |
| COS | Coarse Ore Stockpile |
| CWi | Crushing work index |
| DMS | Dry Magnetic Separation |
| dt/h | dry tonnes per hour |
| DTR | Davis Tube Recovery |
| F₈₀ | Feed Particle Size Distribution - 80 % passing |
| Fe | Iron |
| FORTESCUE/FMG | Fortescue Metals Group Ltd |
| G | Gauss |
| g/t | grams per tonne |
| HPGR | High Pressure Grinding Roll |
| kg | Kilograms |
| km | Kilometre |
| kW | Kilowatts |
| kWh/t | Kilowatt hours per tonne |
| µm | micrometres |
| m | Metres |
| m³/h | Cubic metres per hour |
| mFe | Magnetic Iron |
| mm | Millimetre |
| Pa | Pascals |
| Mtpa | Million tonnes per annum |
| dMtpa | dry Million tonnes per annum |
| O/F | Overflow |
| O/S | Oversize |
| P₈₀ | Product Particle Size Distribution - 80 % passing |
| P98 | Product Particle Size Distribution - 98 % passing |
| ROM | Run of Mine |
| rpm | Revolutions per minute |
| SiO₂ | Silica |
| t/h | tonnes per hour |
| t/m²h | Tonnes per square metres per hour, referring to specific settling rate |
| TSF | Tailings Storage Facility |
| U/F | Underflow |
| U/S | Undersize |
| VS | Variable Speed |
| VSD | Variable Speed Drive |
| w/w | Weight / weight |
| WMS | Wet Magnetic Separation |

### 2. NORTH STAR STAGE 2 PLANT

The Stage 2 plant is designed to process 62.5 Mtpa ROM feed at a DTR MR of 32% to produce 20 dMtpa magnetite concentrate product containing 67.1% Fe and 5.6% SiO₂ at a nominal P₈₀ of 30 µm, with a magnetic Fe recovery of 100% (in comparison to lab DTR testwork results of the ROM feed).

The main Process Plant consists of the following dry and wet plant facilities:
- Primary crushing
- Secondary crushing
- Tertiary HPGR crushing / screening
- HPGR grinding / air classification
- Fine grinding with magnetic separation and deslime
- CMS concentrate upgrade circuit
- Concentrate and tailings thickening
- Overland pipeline to port
- Concentrate filtration and storage facility at port.

### 2.1 Overall Process Flowsheet

Extensive test work programs and process modelling has been conducted over more than 5 years to establish and validate the basis of design for the process flow sheet. This testing has utilised material from diamond core drilling as well as initial mining operations. Extensive laboratory and vendor tests has been validated and confirmed by the operation of the Stage 1 demonstration plant and the pilot plant at site configured to the Stage 2 flowsheet.

The North Star, Eastern Limb and Glacier Valley low moisture ore bodies enable a dry process using two-stage crushing, HPGRs, screening and air-classifiers, replacing the more conventional (and higher-energy) wet process of ball-milling and cycloning. The use of higher efficiency stirred regrind mills for subsequent wet processing further reduces energy consumption.

Based on operating data from the Stage 1 Demonstration Plant and extensive test work in vendor labs and at the North Star Pilot Plant, the Stage 2 Flowsheet was developed designating the plant into the following seven modular areas:
- Module 1 - Primary Crushing
- Module 2 - Secondary Crushing
- Module 3 - Tertiary Crushing
- Module 4 - Grinding
- Module 5 - Fine Grinding
- Module 6 - Tailings
- Module 7 - Dewatering (Port)

The overall Stage 2 processing Flowsheet is shown in Figure 1.

### 2.2 Process Plant

The Stage 2 Process Plant is designed to process 62.5 Mtpa ROM feed at a ROM feed DTR MR of 32% to produce 20 Mtpa magnetite concentrate product containing 67.1% Fe and 5.6% SiO₂.

Table 3 shows a summary of the major equipment for the Stage 2 Plant.

**Table 3: Stage 2 Major Equipment Summary**

| **Equipment** | **Details** | **Number of Units** | **Installed Power (kW) per unit** |
|---|---|---|---|
| Primary Crushers | 63"-130" (1.6 m - 3.3 m) semi mobile gyratory crusher for maximum feed size of 1,250 mm | 2 | 1,500 |
| Secondary Crushers | 1,050 kW cone crushers for maximum feed size of 400 mm | 6 | 1,050 |
| Screens | 3.6 m wide x 7.3 m long banana screens | 10 | 90 |
| Tertiary Crushing HPGRs | 2.4 m diameter x 2.2 m wide roll operating at 4 N/mm² pressure and 2.7 m/s roll speed | 4 | 2 x 5,100 or 5,700 |
| Dry Magnetic Separators | Single drum 1.22 m diameter x 4.0 m, 3000 Gauss | 20 | 7.5 |
| Air Classifiers - Static / Dynamic | 6.1 m diameter, 0.76 Mm³/h | 12 | 2,520 |
| Baghouses | Full size - 25,000 m² cloth area, | 6 | 1,056 |
| Primary Grinding HPGRs | 2.2 m diameter x 2.0 m wide roll operating at 4 N/mm2 pressure and 2.0 - 2.2 m/s roll speed | 8 | 2 x 3,400 |
| Rougher Wet Magnetic Separators | Single drum 1.2 m diameter x 3.05 m, 1150 Gauss | 64 | 11 |
| Upstream Cyclones | 250 mm diameter, 8 clusters of 16 cyclones each | 128 | N/A |
| Fine Grinding Mills | HIGmill 5000 (2.4m dia, 50,000 litres) | 8 | 5,000 |
| Deslime Thickeners | 4 + 1 17m dia CCDs | 5 | N/A |
| Cleaner Wet Magnetic Separators | Triple drums each 1.2 m diameter x 3.05 m, 1000 Gauss | 48 | 33 |
| Cons Cyclones | 250mm diameter, 4 clusters of 22 cyclones each | 88 | N/A |
| High Frequency Vibrating Screens | High Frequency Vibrating Multifeed 48-90MS-3 screen with three SWG48-30DF280 steel sandwich panels | 88 | 1.8 |
| Regrind Mills | HIGmill 5000 (2.4m dia, 50,000 litres) | 2 | 5,000 |
| ReCleaner Wet Magnetic Separators | Triple drums each 1.2 m diameter x 3.05 m, 1000 Gauss | 7 | 33 |
| Concentrate Cleaner / Thickeners | 2 + 1 17m dia CCDs | 3 | N/A |
| High Grade Concentrate Thickener | 26 m diameter high rate thickener | 1 | 15 |
| Tailings Thickener | 69m diameter high rate thickener | 3 | 30 |
| Tailings Transfer Pumps | centrifugal pumps | 10 | 1,680 |
| Concentrate Transfer Pumps | positive displacement pumps | 4 | 1,060 |
| Concentrate Thickener (Port) | 50m diameter high rate thickener | 1 | 30 |
| Concentrate Filters (Port) | Dewatering drums w/Vacuum Belt Filters | 8 | 40 |

### 3. PROCESS DESCRIPTION

### 3.1 Module 1 - Primary Crushing (F₁₀₀ 1.2m to P₁₀₀ 400mm)

From the mining operations' prepared ROM fingers, ROM ore is loaded into Caterpillar 793F or equivalent rear tipping dump trucks and hauled to two gyratory type Primary Crushers. The Primary Crushers receive ore with an average F₈₀ size of 310 mm (based on heavy ANFO blast modelling) and at an average moisture of 0.6%. Based on a design CWi of 21 kWh/t, two primary crushers are each capable to provide a crushed product with a P₈₀ of 140 -160 mm that is conveyed to downstream secondary crushing in Module 2.

At the on-stream utilisation of approximately 76.5% (6700 h/a), each primary crusher will nominally process 4,630 t/h of material and have a design throughput rate of 6,600 t/h. This extra capacity allows for mining to feed each primary crusher (and subsequent downstream secondary crushers) from a 50 / 50 split ratio up to a maximum 60 /40 split ratio.

Refer to Figure 2.

### 3.2 Module 2 - Secondary Crushing (F₁₀₀ 400mm to P₁₀₀ 80mm)

Secondary Crushing aims to reduce the size of the Primary Crusher product prior to sending the material to the Coarse Ore Stockpiles (COS). Six cone type Secondary Crushers each operate at a nominal throughput rate of 1,540 t/h with an on-stream utilisation of 76.5%. Ore is discharged from the crushers at a P₈₀ of 40 mm to 45 mm and is sent to the COS. The COS consists of four stockpiles that allows the material to be stacked according to target mass recovery ranges (low, medium and high). A moving average time lag of data from on-line magnetic analysis will assist the radial stacker to direct the crushed material to the corresponding piles.

The COS serves as a break point between the upstream Modules 1 and 2 (on-stream utilisation of 76.5%) from the rest of the plant which operates with an on-stream utilisation of 84.5% by providing up to 12 hr of live storage prior to requiring dozers to push the material forward for downstream processing. Four apron feeders under the COS fine-tune the blend to ensure a uniform mass recovery feed to the downstream Module 3.

See Figure 2: Modules 1 and 2.

### 3.3 Module 3 - Tertiary Crushing (F₁₀₀ 80mm to P₁₀₀ 8mm)

Tertiary crushing by HPGR was introduced to the North Star 2 flowsheet to allow a consistent, fine feed to primary grinding. Secondary crushed ore from the coarse ore stockpile (F₁₀₀ 80mm) is fed to the HPGR crushing circuit to generate a minus 6 to 8mm product. Four crushing HPGRs are closed with ten dry double deck banana screens to generate a consistent product. For the 20 Mtpa concentrate production flowsheet, 8,340 t/h ore exits the screen undersize at a P₈₀ of 4.2mm after being passed through the Module 3 HPGRs 2.25 times and crushed from a feed F₈₀ of 43mm.

The screen undersize is then fed to twenty dry magnetic separation (DMS) units to effectively discard silica and non-magnetic materials prior to being sent to further downstream primary grinding. The flowsheet top size of 8 mm has been selected based on IBO plant data and testwork. Consequently, the DMS operation will process the 32% MR feed over a 3000G rare earth type dry drum and reject 17 % of the total mass (primarily silica and other non-magnetics) with a low magnetics loss of 1.5%. Refer to Figure 3.

For the 20 dMtpa concentrate production flowsheet, DMS rejects equates to 10.5 dMtpa material with a nominal composition of 16.3 % Fe and 51.8 % SiO₂ being sent to dry tails stacking. See Figure 3: Module 3.

### 3.4 Module 4 - Primary Grinding (F100 6 - 8mm to P₈₀ 60 - 100µm)

Eight HPGRs in grinding service operate in closed circuit with air classification to produce a P₈₀ of 80 µm product to feed the wet plant. The HPGR product discharge is targeting 20% by mass of the discharge product to be ≤ 80 µm when receiving a feed with a BBWi of ≤ 20.8 kWh/t and operating at a circulating load of 490%.

Minus 6 mm Module 3 product material is conveyed with recirculated HPGR ground product to the Air Classifier Feed Bin. Ten air classification systems operate in parallel to remove fines generated from the HPGR product targeting a P₈₀ circa 80 µm. For each AC system, ore is withdrawn from the base of the AC feed bin by a variable speed air classifier vibratory feeder to provide a constant feed rate to the Static Separators.

The air-classifier system is a three product separator, comprised of Static and Dynamic Separators. The Static section separates a "coarser fines" cut from the air classifier which is then air conveyed to the dynamic separator. Within the dynamic separator, the fines is further refined targeting an exit product to the baghouse at a P₈₀ of 80 µm and a top size of < 2 mm. The coarse material discharging from the static and dynamic sections of the air classifiers are combined and sent to the HPGR Grinding Feed Bins.

The dynamic classifier product (P₈₀ 80 µm) fraction is recovered via a baghouse system and transported via covered conveyors to six, agitated Coarse Slurry tanks, where process water is added to slurry the fines to a solids density of 50% w/w. The slurry is then pumped to two agitated RMS Feed Tanks, where it is further diluted to a solids density of 30% w/w before being fed to the Rougher Wet Magnetic Separation Circuit. Refer to Figure 4.

### 3.5 Module 5 - Fine Grinding (F₈₀ 80µm to P₈₀ 35µm)

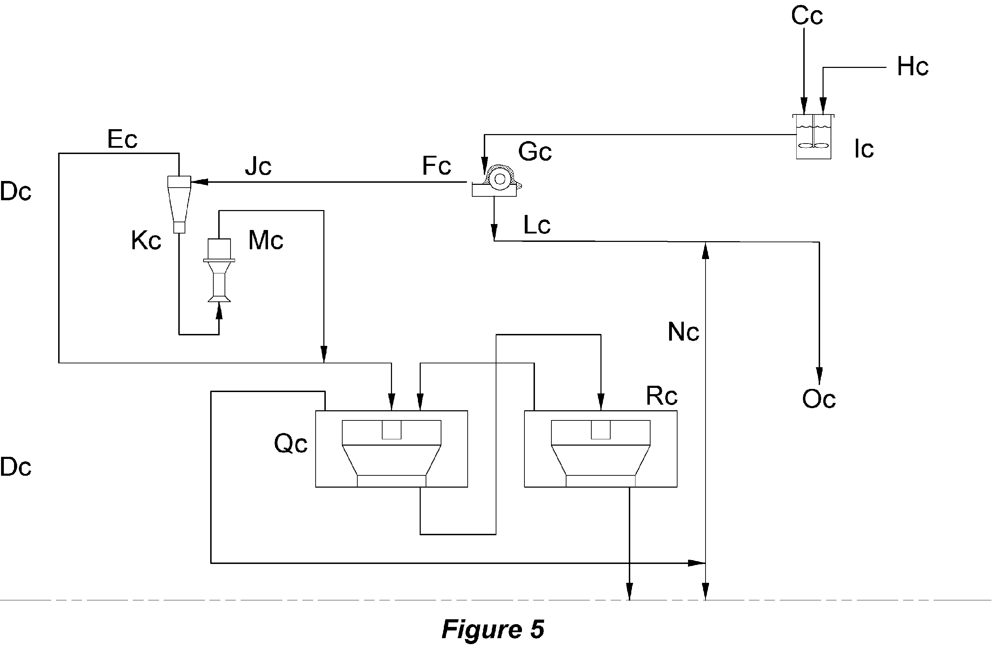

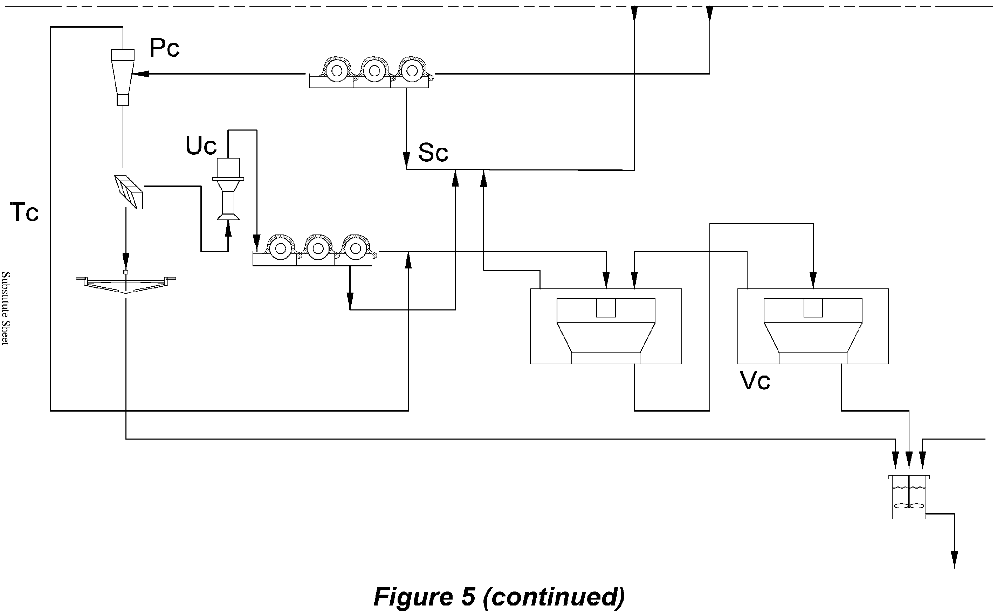

Module 5 consists of the wet concentration plant as depicted in Figure 5.

The Module is further subdivided into the following:
- Module 5A - consists of rougher wet magnetic separation (WMS) and cyclone classification
- Module 5B - consists of fine grinding and desliming
- Module 5C - consists of cleaner wet magnetic separation (WMS) and a concentrate product upgrade circuit

Within Module 5A, air classifier fines from Module 4 are pumped at a solids density of 30% w/w to the Rougher WMS (RMS) units. The RMS units are single drums with ceramic ferrite magnets operating at a magnetic intensity of 1150 G. For the 20 dMtpa concentrate production flowsheet, the RMS units reject 38% of the total mass to tails while limiting magnetic Fe (mFe) losses to 1.8%. The RMS cons are sent to hydrocyclones to remove fines material < P₈₀ of 35 µm (laser) prior to being sent to stirred mills that are designed to grind to a product size P₈₀ of 35 µm (laser). Consequently, 25% of the material sent to the hydrocyclones is sent to overflow and bypasses the stirred mills to reduce power consumption due to overgrinding.

Within Module 5B, open circuit stirred mills are used for grinding hydrocyclone underflow at a F₈₀ of 105 µm (screen) to produce a product P₈₀ of 35 µm (laser) and consuming 9 kWh/t of power. The fine ground product is then combined with the hydrocyclone overflow and sent to the de-sliming circuit.

A 2-stage de-slime circuit operates at high rise rates (8 - 10 m/h based on O/F) to allow significant removal of low density, high silica content solids (up to 22% mass at 59 to 63% SiO₂ concentration) while limiting mFe losses to 1.5 % prior to being sent to the CMS circuit. For the 20 dMtpa concentrate production flowsheet, five CCDs are proposed (4 in parallel followed by 1 in series) for the de-slime circuit due to their smaller diameter and subsequent lower water consumption.

Within Module 5C, the de-slimed product from Module 5B is pumped at a solids density of 20% w/w to the Cleaner WMS (CMS) units. The CMS units are triple drum Stephenson types with ceramic ferrite magnets operating at a magnetic intensity of 1000 G. For the 20 Mtpa concentrate production flowsheet, the CMS units reject 13% of the total mass to tails while limiting magnetic Fe (mFe) losses to 0.6 %.

Depending upon the ore body being processed, the Cleaner Concentrate will be in the 64 - 67 % Fe range. Testwork has indicated significant decrease in Fe grade in size fractions >45 µm for both the North Star and Eastern Limb deposits. Hence, the remaining portion of Module 5C is collectively known as the Concentrate Product Upgrade circuit where processing steps are employed to ensure the final concentrate product is at a P₉₈ of 45 µm (screen) in order to achieve the final product grade target of 67.1% Fe and 5.6% SiO₂. Equipment within the upgrade circuit includes:
- Cons cyclones - overflow contains approximately 60% of the inlet cleaner cons mass at a P₈₀ of 24 µm (laser) and is sent to the CCD cleaners;
- High Frequency Vibrating screens - underflow contains approximately 60% of the inlet cons cyclone U/F is sent to the High grade concentrate thickener;
- High grade (HG) concentrate thickener - further upgrades the High Frequency Vibrating screen U/S in a high rate thickener to a product grade of 68 - 69 % Fe;
- Regrind Mills - regrinds High Frequency Vibrating screen O/S at a F₈₀ of 69 µm (screen) to produce a product P₈₀ of 26 - 30 µm (laser) and consuming 12.2 kWh/t of power;
- Recleaner wet magnetic separators - process regrind mill product at a solids density of 20% w/w through RCMS (Recleaner wet Magnetic Separation) units consisting of triple drum Stephenson types with ceramic ferrite magnets operating at a magnetic intensity of 1000 G. The RCMS units reject 16% of the total mass to tails while limiting magnetic Fe (mFe) losses to 1.5 %.
- CCD cleaners - process cons cyclone O/F and RCMS cons in a 2-stage de-slime circuit operating at high rise rates (8 - 10 m/h based on O/F) to allow additional removal of low density, high silica content solids (up to 8% mass at 45% SiO₂ concentration) while limiting mFe losses to 1.1 %.

The upgrade circuit removes approximately 7% of the inlet cleaner concentrate mass to achieve the 67.2% Fe grade with an estimated 1% magnetic losses. The HG and CCD thickener products are combined in the Concentrate Storage Tanks and subsequently pumped to the Module 7 Port via an overland pipeline.

### 3.6 Module 6 - Tailings

Wet tailings from the RMS, CMS and RCMS are combined with overflow from the RMS Deslime and CCD Cleaner O/F streams and sent to three tailings high rate thickeners prior to pumping to a tailings storage facility (TSF). The tailings thickeners are designed to achieve an underflow density of 62%w/w solids while operating at a specific settling rate of 0.3 t/m²h and rise rate of 5 m/h. Flocculant addition has been designed to 40 g/t based on testwork and coagulant addition is being considered as a mitigating strategy for reducing the amount of residual flocculant in the process water that provides make-up water to the deslime circuits. Refer to Figure 6.

For the 20 dMtpa concentrate production flowsheet, 32 Mtpa solids with an estimated composition of 18% Fe and 52% SiO₂ containing 19.4 Gl/a water are transported via a 7 km slurry pipeline to the TSF.

See Figure 6: Module 6.

### 3.7 Module 7 - Dewatering (Port)

2,700 dt/h slurry at a density of 62%w/w solids is pumped approximately 135 km to the port. Based on testwork (Paterson & Cooke), yield stress of 1.8 Pa and plastic viscosity of 40 mPa.s was used for pumping calculations. The slurry is pumped at a solids density in the range of 55% to 68%w/w, at a velocity of 1.7 to 1.8 m/s.

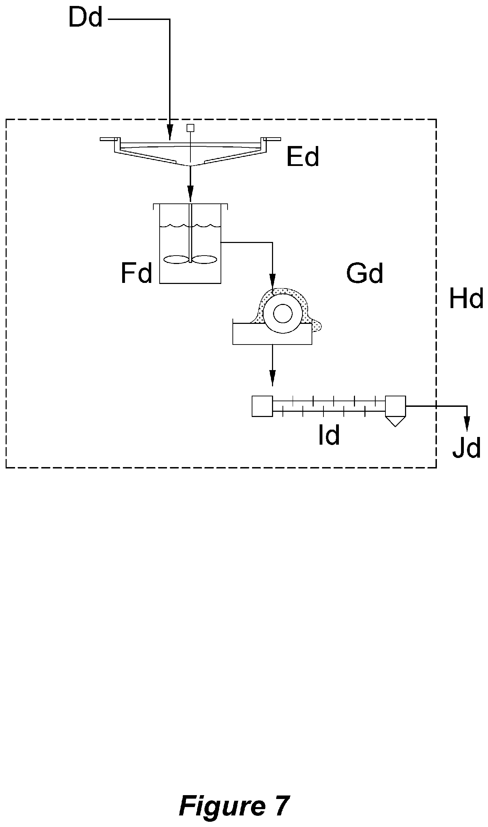

The port filtration facility is based on magnetic drums and belt filters, and includes a thickener, filter feed tanks, filters and ancillary equipment, as shown in Figure 7. Sixteen drums and 8 belt filters operate at a filtration rate to achieve a target moisture content of ≤ 10%w/w.

See Figure 7: Module 7.

### Notes: Process Flow

Significant novel and inventive areas to consider are combined Module 3 / 4, combined Module 5A / 5B and Module 5C.

### Module 3 Tertiary Crushing and Module 4 Grinding: The novel flowsheet allows for:

- Optimisation to promote the HPGR to work more to maximise the HPGR to promote micro-fissuring of the material at lower power consumption where:
   - Inlet feed size to Module 3 can be run at top size of 80 mm preferably (and potentially to 100mm) to reduce load on upstream secondary crushing
   - Exit feed size from Module 4 at a P₈₀ of 80 µm (and potentially down to 60 µm) to improve magnetic liberation and power reduction to the downstream magnetic separators and tower mills, respectively.
- Dry magnetic Separation occurring outside the two circuits allows for optimum size being sent to the DMS (top size of 6 - 8 mm) to effectively discard silica and non-magnetic materials at low magnetic losses (17 % mass loss at 1.5 % magnetic loss). Also, with the DMS being external to the circuits, this mitigates the effects of inlet feed ROM mass recovery fluctuations to the two independent circuits.
Refer Figure 8.

### Module 5a & 5b Fine Grinding: The novel flowsheet allows for:

- Optimisation of mill power by using the Upstream Cyclones as a "Power" splitter by diverting approximately 25% of the material in the cyclone overflow to the downstream de-slime thickeners.
- Desliming of mill and cyclone overflow Magnetite Products at high rise rates (10 m/h) to effectively discard silica and non-magnetic materials at low magnetic losses (22% mass loss at 1.5% magnetic loss (MFe)) to ensure better operating performance exiting the downstream CMS units.
Refer Figure 9.

With reference to Figure 9a, there is shown an alternate flowsheet which further expands claims 1 - 14 as depicted in Fig. 9 to demonstrate the second circuit to grind the more difficult material that has passed through the first mill circuit (Item 24). The mill product from Item 24 is further processed to remove non-magnetic materials (via the deslime thickeners and cleaner magnetic separators) where the magnetic concentrate stream is further sized via cyclones (to remove fines) and high frequency low amplitude vibrating screens where the high frequency low amplitude vibrating screen oversize stream serves as feed to the second stage open circuit mill system. Although this second stage open circuit mill system is operated at a higher energy grind mode than the first stage circuit, the feed to the second stage circuit is only 12-18% of the feed stream to the first stage mill circuit, thus minimising overall mill power consumption by only grinding the larger, lower flow rate, more difficult material.

### Module 5c Product Upgrade Circuit: The novel flowsheet allows for:

- Guaranteeing Fe grade at 67+% for all ore bodies considered for the project. Typical upgrade of 64+% Fe to 67+% Fe with < 10% mass loss of the feed to Module 5c (or 2 - 3 % of original ROM feed).
- Upgrade circuit minimises additional grinding by only processing 15 - 20 % of the CMS cons material and ensures final concentrate product is at a P₉₈ of 45 µm (screen) to achieve target grade of 67+% Fe and < 6% SiO₂.
- Potential to provide a High Grade magnetite product i.e. 25% of total product at a Fe grade > 68%.
Refer Figure 10.

As will be understood from the foregoing, an example of the invention provides an apparatus for processing magnetite iron ore, including a first high pressure grinding roller (HPGR) for crushing the magnetite iron ore into particles, and a second high pressure grinding roller (HPGR) for grinding the particles. Advantageously, the applicant has determined that energy savings are achieved by having a first HPGR which does a crushing operation and a second HPGR which does a grinding operation. It would not previously have been conceived that an HPGR could be used to reduce a feed particle size distribution of 8mm, 100% passing (F₁₀₀8mm) to produce a product P₈₀ of 80 µm owing to vibrations, the product being too fine, the absence of voids and chatter from the machinery. The applicant has identified viscosity in the material, an ability of the HPGR to shear iron ore material from the silica, and has applied inventiveness to arrive at an arrangement which enables significant energy and cost savings. The present invention involves an unexpected result that has been achieved by virtue of the inventors' knowledge, expertise, ingenuity and time investment.

In one form, the first high pressure grinding roller may crush the magnetite iron ore from a feed particle size distribution of at least 80mm, 100% passing (F₁₀₀80mm), to a feed particle size distribution of 8mm, 100% passing (F₁₀₀8mm). The second high pressure grinding roller crushes the particles from a feed particle size distribution of at least 6-8mm, 100% passing (F₁₀₀ 6-8mm), to a feed particle size distribution of 60-100µm, 80% passing (F₈₀ 60-100µm).

Advantageously, there is provided a method of processing a low moisture magnetite ore body via a two-stage HPGR circuit which allows for the optimisation of the HPGR to work from top size of 80mm to produce a product P₈₀ of 80 µm to reduce power consumption. A first HPGR circuit may be in closed circuit with a screen, and a second HPGR circuit may be closed with an Air Classifier / Baghouse system. The two circuits may be separated by Dry Magnetic Separation, to remove non-magnetic waste material prior to the second circuit, thus reducing the throughput and additional grinding to the second HPGR circuit.

Advantageously, examples of the present invention ensure that 67% Fe grade is achievable from 64 - 65 wt% total Fe magnetite feed streams with minimal mass loss by (a) removing slimes (cons cyclone) prior to further hydroseparation processing; and (b) limiting +45 micron material to < 2 wt% in the final product stream via derrick screens followed by regrind mills and magnetic separators to limit oversize mass loss.

Advantageously, the present invention provides a method of dewatering fine magnetite concentrate (P80L ≤ 45µm or more specifically P80L of 25µm - 35µm) to ≤ 10% w/w moisture content, with an apparatus for dewatering magnetite, where the dewatered magnetite is discharged from the drum and further dewatered using a conveyor belt filter arranged such that the magnetite conveyed along the upper surface of the belt filter will compress itself downwardly under magnetic attraction within the magnetite such that water is further expelled from the magnetite and drains through the conveyor belt filter.

While various embodiments of the present invention have been described above, it should be understood that they have been presented by way of example only, and not by way of limitation. It will be apparent to a person skilled in the relevant art that various changes in form and detail can be made therein without departing from the scope of the invention. Thus, the present invention should not be limited by any of the above described exemplary embodiments.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

### EXPLANATION OF REFERENCE LETTERS IN THE DRAWINGS

### Figure 1

- A: Primary crushing (x 2)
- B: Secondary crushing (x 6)
- C: Coarse ore stockpile
- D: High pressure grinding rolls (4)
- E: Fines
- F: Air classifiers (x 10)
- G: Bag houses (x 6) - 4 full size / 2 half size
- H: Mags
- I: Oversize
- J: Undersize
- K: Dry screens (x 10)
- L: Coarse
- M: High pressure grinding rolls (x 8)
- N: Dry magnetic separation (x 20)
- O: Coarse rejects stockpile
- P: Water addition
- Q: Coarse transfer tanks (x 2)
- R: Cyclone overflow
- S: RMS mags
- T: Rougher wet magnetic separation (x 58)
- U: RMS non-mags
- V: RMS deslime thickener overflow
- W: Cyclone underflow
- X: Fine grinding mills (x 7)
- Y: Tailings thickeners (x 3)
- Z: To tailings storage facility
- Aa: Overflow
- Ba: RMS Deslime LFCUs (4 x 1)
- Ca: RMS Deslime underflow
- Da: Cleaner wet magnetic separation (x 44)
- Ea: CMS mags
- Fa: Cyclone overflow
- Ga: Cyclone underflow
- Ha: Derrick screens (x 80)
- Ia: Oversize
- Ja: Undersize
- Ka: Regrind mill (x 2)
- La: Re-cleaner wet magnetic separation (x 6)
- Ma: CMS non-mags
- Na: RCMS non-mags
- Oa: High grade concentrate thickener
- Pa: RCMS mags
- Qa: Overflow
- Ra: CCD cleaner LFCUs (2 x 1)
- Sa: Water addition
- Ta: Concentrate storage tanks (x 4)
- Ua: Concretrate pipeline to port
- Va: Concentrate filter feed tank (x 4)
- Wa: Concentrate thickener
- Xa: Port concentrate handling facility
- Ya: Dewatering drums (x 16)
- Za: Concentrate filters (x 8)
- Ab: PW Return to OPF
- Bb: Concentrate product to storage

### Figure 2

- Cb: Module 1
- Db: Primary Crushing
- Eb: Module 2
- Fb: Secondary crushing (x 3)
- Gb: Coarse ore stockpile

### Figure 3

- Hb: Fresh feed from COS
- Ib: High pressure grinding rolls
- Jb: Dry screen
- Kb: Oversize
- Lb: Undersize
- Mb: Mags
- Nb: To Module 4
- Ob: Dry magnetic separation
- Pb: Non mags
- Qb: DMS rejects

### Figure 4

- Rb: From Module 3
- Sb: Air classifier (static/dynamic)
- Tb: Fines
- Ub: Mags
- Vb: Coarse
- Wb: Bag House
- Xb: Transfer Hoppers
- Yb: High pressure grinding rolls
- Zb: Water addition
- Ac: RMS feed tank
- Bc: To Module 5A

### Figure 5

- Cc: From Module 4
- Dc: Module 5A
- Ec: Cyclone overflow
- Fc: RMS mags
- Gc: Rougher wet magnetic separation (x 58)
- Hc: Water addition
- Ic: RMS feed tank
- Jc: RMS deslime thickener overflow
- Kc: Cyclone underflow
- Lc: RMS non-mags
- Mc: Fine grinding mills (x 7)
- Nc: RMS Deslime LFCUs (4 x 1)
- Oc: To Module 6
- Pc: CMS mags
- Qc: Cleaner wet magnetic separation (x 44)
- Rc: RMS deslime underflow
- Sc: CMS non-mags
- Tc: Module 5B
- Uc: Regrind mill
- Vc: CCD cleaner LFCUs (2 x 1)

### Figure 6

- Wc: Module 5A - RMS non-mags
- Xc: Module 5B - RMS Deslime O/F
- Yc: Module 5C - CMS Non-mags
- Zc: Module 5C - RCMS Non-mags
- Ad: Module 5C - CCD cleaner O/F
- Bd: Tailings thickeners (x 3)
- Cd: To tailings storage facility

### Figure 7

- Dd: Concentrate pipeline to port
- Ed: Concentrate thickener
- Fd: Concentrate filter feed tank (x 4)
- Gd: Dewatering drums (x 16)
- Hd: Concentrate handling facility
- Id: Concentrate filters (x 8)
- Jd: Concentrate product to storage

### Figure 8

- Kd: Fresh feed
- Ld: Module 3
- Md: High pressure grinding rolls
- Nd: Module 4
- Od: Oversize
- Pd: Undersize
- Qd: Dry screen
- Rd: Mags
- Sd: Air classifier (Static/dynamic)
- Td: Fines
- Ud: Coarse
- Vd: Dry magnetic separation
- Wd: Non mags
- Xd: DMS rejects
- Yd: High pressure grinding rolls
- Zd: Bag House
- Ae: Transfer hoppers
- Be: Water addition
- Ce: RMS feed tank
- De: To module 5A

### Figure 9

- Ee: Air classifier fines
- Fe: Module 5a
- Ge: Cyclone overflow
- He: Module 5b
- Ie: RMS cons
- Je: RMS tails
- Ke: Magnetic separator
- Le: Upstream cyclone
- Me: To Module 6
- Ne: Cyclone underflow
- Oe: To mill feed tank
- Pe: HIGmill
- Qe: Mill product tank
- Re: Overflow
- Se: To tailings
- Te: Water addition
- Ue: Underflow
- Ve: CCD1
- We: CCD2
- Xe: Deslime thickeners
- Ye: To CMS

### Figure 9a

- Ze: Figure 9
- Af: Cleaner magnetic separation
- Bf: CMS tails
- Cf: Cons cyclone o/flow fines
- Df: Cons cyclone
- Ef: Cons cyclone u/flow
- Ff: High frequency low amplitude vibr. screen
- Gf: Screen u/size
- Hf: O/size
- If: 2^{nd} stage mill circuit
- Jf: Mill product

### Figure 10

- Kf: From Module 5C Part A
- Lf: CMS Cons
- Mf: Cyclone overflow
- Nf: Cyclone underflow
- Of: Oversize
- Pf: Derrick Screen
- Qf: Undersize
- Rf: HG TH Overflow
- Sf: High grade concentrate thickener
- Tf: Regrind Mill
- Uf: Re-cleaner wet magnetic separation
- Vf: RCMS Tails
- Wf: RCMS cons
- Xf: To tailings Module 6
- Yf: Overflow
- Zf: Underflow
- Ag: CCD1
- Bg: CCD2
- Cg: CCD3
- Dg: Water Addition
- Eg: CCD deslime thickeners
- Fg: Filter
- Gg: Feed tank
- Hg: To Filtration Module 7

## Claims

1. An apparatus for processing magnetite iron ore, including an upstream cyclone (22) and a mill (24) for grinding particles, wherein the upstream cyclone (22) is arranged to operate as a splitter by diverting material in an overflow of the upstream cyclone (22) to bypass the mill (24) and by feeding material in an underflow of the upstream cyclone (22) to the mill (24), the apparatus being **characterised in that** it includes a downstream deslime thickener, the downstream deslime thickener (26) being fed material from the mill (24) and from the upstream cyclone (22) overflow at a rise rate to discard silica and non-magnetic materials.

2. An apparatus for processing magnetite iron ore as claimed in claim 1, wherein the downstream deslime thickener (26) is arranged to deslime material from the mill (24) and from the upstream cyclone overflow at a rise rate to discard silica and non-magnetic materials at relatively low magnetic material losses compared to mass loss.

3. An apparatus for processing magnetite iron ore as claimed in claim 2, wherein the downstream deslime thickener (26) is arranged to deslime material from the mill (24) and from the upstream cyclone (22) overflow at a high rise rate of 8-10m/h to discard silica and non-magnetic materials at relatively low magnetic material losses compared to mass loss.

4. An apparatus for processing magnetite iron ore as claimed in claims 1 or 2, wherein the downstream deslime thickener (26) is arranged such that an overflow from the downstream deslime thickener (26) is diverted to a tailings storage facility (28) and an underflow from the downstream deslime thickener (26) is fed onward for further processing.

5. An apparatus for processing magnetite iron ore as claimed in claim 1, wherein the mill (24) is in the form of a Vertical Stirred Mill VSM.

6. An apparatus for processing magnetite iron ore as claimed in any one of claims 1 to 5, wherein the mill (24) is arranged in the apparatus without any feedback path to the mill (24).

7. An apparatus for processing magnetite iron ore as claimed in any one of claims 1 to 6, wherein the cyclone (22) is arranged to divert approximately 25% of material to bypass the mill (24).

8. An apparatus for processing magnetite iron ore as claimed in any one of claims 1 to 7, wherein the cyclone (22) is arranged to divert finely ground material around the mill (24) to prevent overgrinding feed material, and thus reducing the overall mill power consumption.

9. An apparatus for processing magnetite iron ore as claimed in any one of claims 1 to 8, wherein the mill (24) is part of a first stage open circuit mill system and is configured to operate in a comparable low energy grind mode, where difficult particles are allowed to pass through the mill (24) at above the target grind size to be processed and/or discarded through later processing steps.

10. An apparatus for processing magnetite iron ore as claimed in claim 9, wherein a second stage open circuit mill system grinds difficult material that has passed through the first stage mill circuit; with mill product from the first stage mill circuit being further processed to remove non-magnetic materials, where the magnetic concentrate stream is further sized via cyclones and high frequency low amplitude vibrating screens where a high frequency low amplitude vibrating screen (32) oversize stream serves as feed to the second stage open circuit mill system.

11. An apparatus for processing magnetite iron ore as claimed in claim 10, wherein although the second stage open circuit mill system is operated at a higher energy grind mode than the first stage mill circuit, the feed to the second stage open circuit mill system is only 12-18% of the feed stream to the first stage mill (24) circuit, thus minimising overall mill power consumption by only grinding the larger, lower flow rate, more difficult material.

12. An apparatus for processing magnetite iron ore as claimed in any one of claims 1 to 11, wherein the apparatus comprises a magnetic separator (30) arranged to divert non-magnetic material to a tailings storage facility (28).

## Patentansprüche

1. Vorrichtung zum Verarbeiten von Magnetit-Eisenerz, die einen stromaufwärtigen Zyklon (22)
und eine Mühle (24) zum Mahlen von Partikeln umfasst, wobei
der stromaufwärtige Zyklon (22) angeordnet ist, dass er als Trenner betrieben wird, indem er Material in einem Überlauf des stromaufwärtigen Zyklons (22) umleitet, um die Mühle (24) zu umgehen, und indem er Material in einem Unterlauf des stromaufwärtigen Zyklons (22) der Mühle (24) zuführt, wobei die Vorrichtung **dadurch gekennzeichnet ist, dass** sie einen stromabwärtigen Entschlämmungseindicker umfasst, wobei der Entschlämmungseindicker (26) mit Material aus der Mühle (24) und dem Überlauf des stromaufwärtigen Zyklons (22) bei einer Steiggeschwindigkeit gespeist wird, um Siliziumdioxid und nichtmagnetische Materialien abzuscheiden.

2. Vorrichtung zum Verarbeiten von Magnetit-Eisenerz nach Anspruch 1, wobei der stromabwärtige Entschlämmungseindicker (26) angeordnet ist, um Material aus der Mühle (24) und aus dem stromaufwärtigen Zyklonüberlauf bei einer Aufstiegsgeschwindigkeit zu entschlammen, um Siliziumdioxid und nichtmagnetische Materialien bei relativ geringen Verlusten magnetischer Materialien im Vergleich zu Massenverlust zu verwerfen.

3. Vorrichtung zum Verarbeiten von Magnetit-Eisenerz nach Anspruch 2, wobei der stromabwärtige Entschlämmungseindicker (26) angeordnet ist, um Material aus der Mühle (24) und dem Überlauf des stromaufwärtigen Zyklons (22) bei einer hohen Aufsteigrate von 8-10 m/Std zu entschlammen, um Siliziumdioxid und nichtmagnetische Materialien bei relativ geringen Verlusten magnetischer Materialien im Vergleich zu Massenverlust zu verwerfen.

4. Vorrichtung zum Verarbeiten von Magnetit-Eisenerz nach Anspruch 1 oder 2, wobei der stromabwärtige Entschlämmungseindicker (26) angeordnet ist, sodass ein Überlauf aus dem stromabwärtigen Entschlämmungseindicker (26) zu einem Rückhaltebecken (28) abgeleitet wird und ein Unterlauf aus dem stromabwärtigen Entschlämmungseindicker (26) zum weiteren Verarbeiten zugeführt wird.

5. Vorrichtung zum Verarbeiten von Magnetit-Eisenerz nach Anspruch 1, wobei die Mühle (24) in der Form einer vertikalen Rührwerksmühle, VSM, ist.

6. Vorrichtung zur Verarbeitung von magnetitischem Eisenerz nach einem der Ansprüche 1 bis 5, wobei die Mühle (24) in der Vorrichtung ohne Rückführweg zu der Mühle (24) angeordnet ist.

7. Vorrichtung zum Verarbeiten von Magnetit-Eisenerz nach einem der Ansprüche 1 bis 6, wobei der Zyklon (22) angeordnet ist, um etwa 25 % des Materials um die Mühle (24) abzuleiten.

8. Vorrichtung zum Verarbeiten von Magnetit-Eisenerz nach einem der Ansprüche 1 bis 7, wobei der Zyklon (22) angeordnet ist, um fein gemahlenes Material um die Mühle (24) herum abzuleiten, um ein Übermahlen von Beschickungsmaterial zu verhindern und somit den Gesamtenergieverbrauch der Mühle zu reduzieren.

9. Vorrichtung zum Verarbeiten von Magnetit-Eisenerz nach einem der Ansprüche 1 bis 8, wobei die Mühle (24) Teil eines offenen Mühlensystems der ersten Stufe ist und konfiguriert ist, um in einem vergleichbaren energiearmen Mahlmodus betrieben zu werden, bei dem schwierigen Partikeln ermöglicht wird, die Mühle (24) mit einer Größe oberhalb der Zielmahlgröße zu durchlaufen, um in späteren Verarbeitungsschritten verarbeitet und/oder verworfen zu werden.

10. Vorrichtung zum Verarbeiten von Magnetit-Eisenerz nach Anspruch 9, wobei ein offenes Mühlensystem der zweiten Stufe schwieriges Material mahlt, das den Mühlenkreislauf der ersten Stufe durchlaufen hat; wobei das Mühlenprodukt aus dem Mühlenkreislauf der ersten Stufe weiterverarbeitet wird, um nichtmagnetische Materialien zu entfernen, wobei der magnetische Konzentratstrom über Zyklone und Hochfrequenz-Schwingsiebe mit niedriger Amplitude weiter kornklassiert wird, wobei ein Überkornstrom eines Hochfrequenz-Schwingsiebs (32) als Beschickung für das offene Mühlensystem der zweiten Stufe dient.

11. Vorrichtung zum Verarbeiten von Magnetit-Eisenerz nach Anspruch 10, wobei das offene Mühlensystem der zweiten Stufe mit einem höheren Energiemahlmodus betrieben wird als der Mühlenkreislauf der ersten Stufe, die Beschickung des offenen Mühlensystems der zweiten Stufe jedoch nur 12 bis 18 % des Beschickungsstroms des Mühlenkreislaufs der ersten Stufe (24) ausmacht, wodurch der Gesamtenergieverbrauch der Mühle minimiert wird, indem nur das größere, schwierigere Material mit geringerem Durchsatz gemahlen wird.

12. Vorrichtung zum Verarbeiten von Magnetit-Eisenerz nach einem der Ansprüche 1 bis 11, wobei die Vorrichtung einen Magnetabscheider (30) umfasst, der angeordnet ist, um nichtmagnetisches Material zu einem Rückhaltebecken (28) abzuleiten.

## Revendications

1. Appareil pour le traitement du minerai de fer de magnétite, comprenant un cyclone en amont (22)
et un broyeur (24) pour broyer des particules, dans lequel
le cyclone en amont (22)
est agencé pour fonctionner comme un séparateur en détournant la matière dans un trop-plein du cyclone en amont (22) pour contourner le broyeur (24) et en alimentant le broyeur (24) avec la matière d'une sous-verse du cyclone en amont (22), l'appareil étant **caractérisé en ce qu'**il comprend un
épaississeur de schlamms en aval, l'épaississeur de schlamms en aval (26) étant alimenté en matière provenant du broyeur (24) et de trop-plein du cyclone en amont (22) à un taux de montée permettant d'éliminer la silice et les matières non magnétiques.

2. Appareil de traitement du minerai de fer de magnétite selon la revendication 1, dans lequel l'épaississeur de schlamms en aval (26) est agencé pour déschlammer la matière provenant du broyeur (24) et du trop-plein du cyclone en amont à un taux de montée permettant d'éliminer la silice et les matières non magnétiques avec des pertes relativement faibles de matière magnétique par rapport à la perte de masse.

3. Appareil de traitement du minerai de fer de magnétite selon la revendication 2, dans lequel l'épaississeur de schlamms en aval (26) est agencé pour déschlammer la matière provenant du broyeur (24) et du trop-plein du cyclone en amont (22) à un taux de montée élevé de 8 à 10 m/H permettant d'éliminer la silice et les matières non magnétiques avec des pertes relativement faibles de matière magnétique par rapport à la perte de masse.

4. Appareil de traitement du minerai de fer de magnétite selon les revendications 1 ou 2, dans lequel l'épaississeur de schlamms en aval (26) est agencé de sorte qu'un trop-plein de l'épaississeur de schlamms en aval (26) est dévié vers une installation de stockage des résidus (28) et qu'une sous-verse de l'épaississeur de schlamms en aval (26) est acheminée vers l'avant en vue d'un traitement ultérieur.

5. Appareil de traitement du minerai de fer de magnétite selon la revendication 1, dans lequel le broyeur (24) se présente sous la forme d'un broyeur à agitation vertical (VSM).

6. Appareil de traitement du minerai de fer de magnétite selon l'une quelconque des revendications 1 à 5, dans lequel le broyeur (24) est agencé dans l'appareil sans aucune voie de retour vers ce le broyeur (24).

7. Appareil de traitement du minerai de fer de magnétite selon l'une quelconque des revendications 1 à 6, dans lequel le cyclone (22) est agencé pour dévier environ 25 % de la matière afin de contourner le broyeur (24).

8. Appareil de traitement du minerai de fer de magnétite selon l'une quelconque des revendications 1 à 7, dans lequel le cyclone (22) est agencé pour dévier la matière finement broyée autour du broyeur (24) afin d'empêcher le surbroyage de la matière introduite et de réduire ainsi la consommation électrique globale du broyeur.

9. Appareil de traitement du minerai de fer de magnétite selon l'une quelconque des revendications 1 à 8, dans lequel le broyeur (24) fait partie de la première étape d'un système de broyage en circuit ouvert et est configuré pour fonctionner dans un mode de broyage à faible consommation d'énergie, comparable, où les particules difficiles passent par le broyeur (24) à une taille supérieure à la taille de broyage cible pour être traitées et/ou éliminées lors d'étapes de traitement ultérieures.

10. Appareil de traitement du minerai de fer de magnétite selon la revendication 9, dans lequel un système de broyage en circuit ouvert de la seconde étape broie la matière difficile qui a traversé le circuit de broyage de la première étape ; le produit de broyage du circuit de broyage de la première étape étant encore traité pour éliminer les matières non magnétiques, où le flux de concentré magnétique est ensuite calibré par des cyclones et des cribles vibrants à haute fréquence et à faible amplitude, où un flux de refus du crible vibrant à haute fréquence et à faible amplitude (32) sert d'alimentation au système de broyage en circuit ouvert de la seconde étape.

11. Appareil de traitement du minerai de fer de magnétite selon la revendication 10, dans lequel, bien que le système de broyage en circuit ouvert de la seconde étape fonctionne en mode de broyage à consommation d'énergie plus élevée que le circuit de broyage de la première étape, l'alimentation du système de broyage en circuit ouvert de la seconde étape ne représente que 12 à 18 % du flux d'alimentation du circuit de broyage de la première étape (24), permettant ainsi de minimiser la consommation électrique globale du broyeur en ne broyant que la matière plus grossière, à débit plus faible, plus difficile.

12. Appareil de traitement du minerai de fer de magnétite selon l'une quelconque des revendications 1 à 11, dans lequel l'appareil comprend un séparateur magnétique (30) agencé pour dévier la matière non magnétique vers une installation de stockage des résidus (28).
